Europäisches Patentamt

European Patent Office

Office européen des brevets

(19)

(11) Veröffentlichungsnummer: **0 430 865 A1**

(12) **EUROPÄISCHE PATENTANMELDUNG**

(21) Anmeldenummer: **90810788.1**

(22) Anmeldetag: **16.10.90**

(51) Int. Cl.⁵: **B65G 19/26,** B65G 17/00

---

(30) Priorität: **28.11.89 DE 3939288**

(43) Veröffentlichungstag der Anmeldung:
**05.06.91 Patentblatt 91/23**

(84) Benannte Vertragsstaaten:
**AT BE CH DE DK ES FR GB GR IT LI LU NL SE**

(71) Anmelder: **JAS AG JET AGE SYSTEMS**
**Industriestrasse 14**
**CH-8302 Kloten (CH)**

(72) Erfinder: **Mischler, Ernst**
**Chränzlerstrasse 5**
**CH-8302 Kloten (CH)**

(74) Vertreter: **Rottmann, Maximilian R.**
**c/o Rottmann, Zimmermann + Partner AG**
**Glattalstrasse 37**
**CH-8052 Zürich (CH)**

---

(54) **Förderanlage.**

(57)   Die Förderanlage zum Transportieren von Gütern weist eine Einschienenfahrbahn (1) auf, die gegenüber der Arbeitsebene erhöht angeordnet ist. Entlang der Einschienenfahrbahn (1) sind Laufwagen (2) verfahrbar. Einzelne Bereiche der Förderanlage sind mit Freilauf-Förderorganen (8, 14) ausgerüstet, welche die Laufwagen (2) mitnehmen oder bei laufendem Förderorgan auch einen Stillstand der Laufwagen (2) gestatten. Zu diesem Zweck weisen die Freilauf-Förderorgane seitliche, schwenkbar angeordnete Mitnehmer (20) auf, welche durch Betätigungsschienen (24) aus einer Ruhelage in eine Betätigungsstellung gebracht werden.

Fig. 4

Fig. 5

EP 0 430 865 A1

# FÖRDERANLAGE

Die vorliegende Erfindung betrifft eine Förderanlage zum Transportieren von Gütern, mit einer Einschienenfahrbahn, die gegenüber einer Arbeitsebene erhöht in einer Transportebene verlaufend angelegt ist, insbesondere im Bereich der Decke eines Arbeits- oder Lagerraumes, mit einer Mehrzahl von Laufwagen, welche mit sich auf der Einschienenfahrbahn abwälzenden Rollen ausgerüstet und welche entlang dieser Schienenfahrbahn in der Transportebene verfahrbar sind, und mit Förderorganen zur Verschiebung der Laufwagen entlang der Einschienenfahrbahn.

Die Laufwagen in solchen Förderanlagen können z.B. einfache, stangenartige Elemente sein, die mit Rollen ausgerüstet sind, welche auf der Schienenfahrbahn abrollen. An diese Laufwagen-Elemente können Lastaufnahmeorgane angehängt sein, z.B. in der Form von Körben, Plattformen und dgl., welche die zu transportierenden Güter aufnehmen, oder die Güter können direkt an den Laufwagen-Elementen angehängt werden. Auf diese Weise können die Güter einfach und platzsparend von einem Arbeitsplatz zu einem anderen bzw. von einem Arbeitsplatz in ein Zwischen- oder Endlager resp. vom Zwischenlager zurück an den Arbeitsplatz verschoben werden.

Der Transport der Güter erfolgt dabei im allgemeinen in einer ersten, hochgelegenen Ebene oberhalb der Arbeitsplätze, insbesondere im Bereich der Decke eines Arbeitsraumes, während die Bearbeitung bzw. Weiterverarbeitung der Güter üblicherweise in einer zweiten, tiefer gelegenen Arbeitsebene erfolgt, insbesondere im Bereich des Fussbodens des Arbeitsraumes.

Im Bereich der einzelnen Arbeitsplätze muss eine im wesentlichen vertikale Verschiebung der Güter von der ersten, hochgelegenen Ebene hinunter in den Bereich der Arbeitsebene erfolgen. Dies wird nach bekannter Art dadurch erreicht, dass die Schienenfahrbahn an vorbestimmten Stellen Senk- und Hubstationen aufweist, d.h. Abschnitte der Schienenfahrbahn, die aus der Transportebene heraus in die Arbeitsebene absenkbar sind. Beispiele solcher Hub- und Senkstationen sind in der DE-OS 32 41 744 und der EP-OS 0 255 798 beschrieben.

Wesentlich im Zusammenhang mit der vorliegenden Erfindung ist jedoch das Zwischen- oder Endlagern der mit Gütern versehenen Laufwagen. Besonders beim Zwischenlagern ist ein häufiger Güterumschlag zu erwarten, der möglichst reibungslos und ohne besonderen Aufwand an Steuerungsmitteln vor sich gehen sollte.

Eine besondere Form der Zwischenlager sind auch die Pufferlager : Wenn von einer ersten Arbeitsstation mehr mit Gütern beschickte Laufwagen ankommen als die nächstfolgende Arbeitsstation momentan verarbeiten kann, müssen die Laufwagen gepuffert in Bereitschaft gehalten werden, um bei freier Kapazität der folgenden Arbeitsstation möglichst unverzüglich an diese gefördert werden zu können.

Es ist die Aufgabe der vorliegenden Erfindung, eine Förderanlage der im Oberbegriff des Anspruchs 1 genannten Art derart weiterzubilden, dass einzelne Bereiche derselben auf einfachste Art und Weise als End-, Zwischen- oder Pufferlager für die Laufwagen ausgebildet werden können.

Gemäss der Erfindung wird diese Aufgabe dadurch gelöst, dass einzelne Bereiche der Förderanlage mit Freilauf-Förderorganen, die bei laufendem Förderorgan einen Stillstand der Laufwagen gestatten, und an deren Ende mit einem wahlweise aktivierbaren Endanschlagorgan versehen sind.

Dadurch kann erreicht werden, dass z.B. zwischenzulagernde Laufwagen bei aktiviertem Endanschlagorgan ohne Rücksicht darauf, wann ein Laufwagen am Endanschlagorgan oder an bereits im Zwischenlagerbereich befindlichen Laufwagen aufläuft, in den Zwischenlagerbereich eingeschleust werden können. Nach einer gewissen, zu ermittelnden Zeitdauer, nach der sichergestellt ist, dass der letzte eingeschleuste Laufwagen aufgeschlossen hat, kann dann das Freilauf-Förderorgan abgestellt werden.

Die restlichen Bereiche der Förderanlage besitzen zweckmässigerweise, wie üblich, eine kraftschlüssig wirkende Fördervorrichtung für die Laufwagen. Mit anderen Worten, die Förderorgane der kraftschlüssig wirkenden Fördervorrichtung weisen Mitnehmer auf, die gegen die Laufwagen anliegen und diese entlang der Einschienenfahrbahn vorwärts bewegen. Um nun sicherzustellen, dass ein Laufwagen von einem Bereich mit kraftschlüssig wirkenden Förderorganen zuverlässig in einen Bereich mit Freilauf-Förderorganen hineinbewegt wird, besitzen die Bereich mit Freilauf-Förderorganen zweckmässigerweise einen Anfangsabschnitt, innerhalb welchem die Laufwagen ebenfalls kraftschlüssig gefördert werden. Vorzugsweise entspricht dieser Anfangsabschnitt im wesentlichen der Länge eines Laufwagens.

Eine vorteilhafte Ausbildung der Freilauf-Förderorgane geht aus den abhängigen Ansprüchen 4-8 hervor und wird im folgenden noch näher beschrieben werden.

Die beispielshafte Ausbildung eines Anfangsabschnitts der mit Freilauf-Förderorganen ausgerüsteten Bereiche der Förderanlage geht aus den abhängigen Ansprüchen 9-12 hervor und wird im folgenden ebenfalls näher beschrieben werden.

Im Gegensatz zu bisher bekannten Förderern ist hier in ausgewählten Bereichen, z.B. Zwischenlager- oder Pufferlager-Bereichen der Förderanlage, eine rollende Tragschiene unter dem Laufwagen realisiert, d.h. die Schiene läuft unter dem Laufwagen, nicht der Laufwagen auf der Schiene. In diesen Bereichen sind daher keine seitlich, über oder unter der Schiene angeordneten, synchron laufenden Förderorgane mit Mitnehmern erforderlich ; es können also auch die Betriebszustände vermieden werden, bei denen die Mitnehmer schleifen oder hüpfen, und auch alle Friktionsbewegungen zwischen Mitnehmern und Laufwagen sind ausgeschlossen.

Andererseits ist die rollende Tragschiene mit Mitnehmern bestückt, die nur im interessierenden Bereich, z.B. am Angang und am Ende eines Staubereichs, aktiv, im akkumulierenden Staubereich hingegen passiv sind. Mit anderen Worten : In interessierenden, beliebigen Abschnitten können die Mitnehmer zur kraftschlüssigen Zwangsförderung der Laufwagen aktiviert werden.

Im folgenden wird ein Ausführungsbeispiel der erfindungsgemässen Förderanlage anhand der beiliegenden Zeichnungen näher beschrieben. In den Zeichnungen zeigen :

Fig. 1 eine schematische Gesamtdarstellung einer beispielsweisen Förderanlage ;

Fig. 2 einen schematischen Querschnitt durch den Bereich der Förderanlage, der mit den Freilauf-Förderorganen ausgerüstet ist ;

Fig. 3 eine schematische Teil-Seitenansicht eines Freilauf-Förderorgans in einem Abschnitt, in dem die Laufwagen freilaufend gefördert werden ;

Fig. 4 eine schematische Teil-Seitenansicht eines Freilauf-Förderorgans in einer Situation, in der sich dessen Mitnehmer in Ruhestellung befinden ; und

Fig. 5 eine schematische Teil-Seitenansicht eines Freilauf-Förderorgans in einer Situation, in der sich dessen Mitnehmer in Arbeitsstellung befinden.

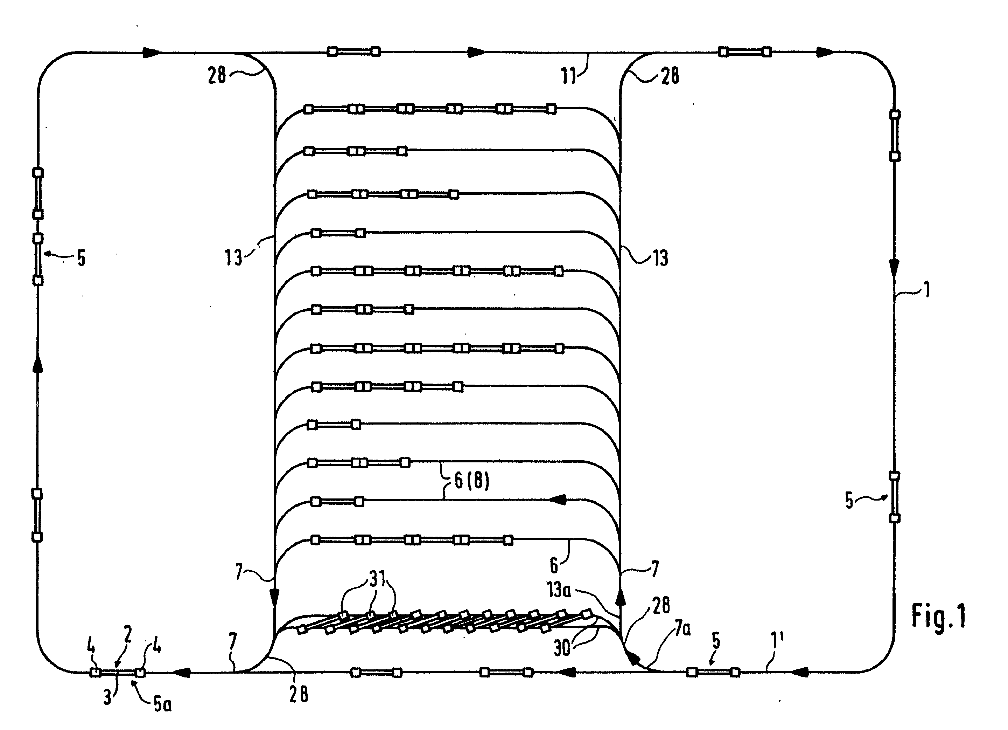

Die in der Fig. 1 schematisch dargestellte Förderanlage zum Transportieren von Gütern, weist eine Einschienenfahrbahn 1 auf, die gegenüber der Arbeitsebene erhöht angeordnet und z.B. auf der Decke eines Arbeits- oder Lagerraumes hängend angelegt ist. Die Einschienenfahrbahn 1 ist eine geschlossene Bahn, besteht aus einer mittels Haltern auf der Decke befestigten Schiene und dient zur Aufnahme von Laufwagen 2, welche entlang der Einschienenfahrbahn 1 mittels Förderorganen verschiebbar sind. Die Laufwagen weisen meistens stangenartige Elemente 3 auf, welche auf beiden Enden mit je einer Rolle 4 oder einem Rollenpaar ausgerüstet sind, die auf der Einschienenfahrbahn 1 bewegbar sind. Zur Aufnahme der zu transportierenden Güter sind Körbe, Plattformen oder ähnliche Behälter vorhanden, welche am stangenartigen Element 3 aufgehängt sind. Mit Hilfe der erwähnten Förderorgane werden die Laufwagen 2 entlang der Einschienenfahrbahn 1 verschoben. Ferner sind Arbeits- oder Lagerplätze 5 vorgesehen, die zur Aufnahme der transportierten Güter zur Be- oder Verarbeitung bzw. zur Lagerung derselben dienen und nicht in der Transportebene sondern darunter, meistens am Boden, angeordnet sind. Dies bedingt, dass die Güter an den betreffenden Stellen vertikal verschoben werden müssen, was mit Hilfe von Senk- und Hubstationen erfolgt. Diese ermöglichen, dass ausgewählte Teile der Einschienenfahrbahn 1 an vorgesehenen Stellen gesenkt und gehoben werden kann. Solche Einrichtungen sind bekannt und brauchen nicht näher beschrieben werden.

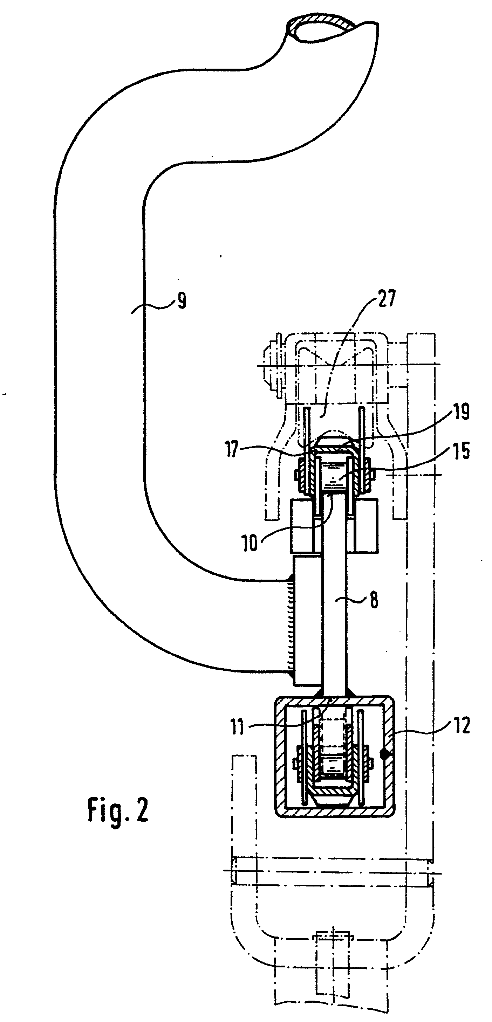

Bei der Güterförderung mit Laufwagen 2 von der einen Arbeitsstation zur anderen kommt es oft vor, dass ein beladener Laufwagen ankommt, obwohl der Inhalt des vorangehenden Laufwagens noch nicht verarbeitet wurde. In verstärktem Masse tritt dieses Problem dann auf, wenn die Be- oder Verarbeitung der Güter an den verschiedenen Stationen verschieden lang dauert. In diesem Falle stauen sich die Laufwagen vor einer Station wo die Verarbeitung längere Zeit in Anspruch nimmt. Um dies zu vermeiden sind im Bereiche der Einschienenfahrbahn 1 Ausweichgeleise 6 vorhanden, die parallel zu einem Abschnitt der Einschienenfahrbahn 1 verlaufen und mittels Weichen 7 an zwei Sammelgeleisen 13 angeschlossen sind, welche die beiden parallelen Teile der Einschienenfahrbahn 1 miteinander verbinden. Die erwähnten Ausweichgeleise 6 sowie die Sammelgeleise 13 sind mit Freilauf-Förderorganen ausgerüstet, welche zwar die Laufwagen 2 mitnehmen, aber, bei laufendem Förderorgan auch einen Stillstand der Laufwagen 2 gestatten, wie dies später beschrieben wird. Die nähere Ausbildung der Freilauf-Förderorgane ist aus den Fig. 2 bis 5 ersichtlich. Sie weisen Ketteneinheiten 14 auf, die eine auf einer Tragschiene umlaufende, endlose Förderkette bilden. In der Fig. 2 ist mit 8 eine Tragschiene bezeichnet, welche mit Hilfe von im Abstand voneinander angeordneten C-förmigen Aufhängeorganen 9 direkt an der Decke oder an einer Zwischenhalterung angeordnet ist. Die Tragschiene 8 weist eine obere Lauffläche 10 und eine untere Fläche 11 auf, wobei auf letzteren ein kastenförmiger Führungskanal befestigt ist.

Jede Ketteneinheit 14 besteht aus zwei Rollen 15, die mittels zwei Laschen 16 gelenkig miteinander verbunden sind. Die Ketteneinheiten 14 sind mit Hilfe von Tragelementen 17 gelenkig miteinander verbunden. Die Tragelemente sind im Querschnitt U-förmig mit nach unten gerichteten Schenkeln ausgebildet und sind so lang, dass sie bei gestreckter Kette mit ihren Stirnflächen 18 aneinander stossen. Die Oberflächen 19 der Tragelemente bilden in dieser Weise eine kontinuierliche Auflageschiene für die Laufwagen.

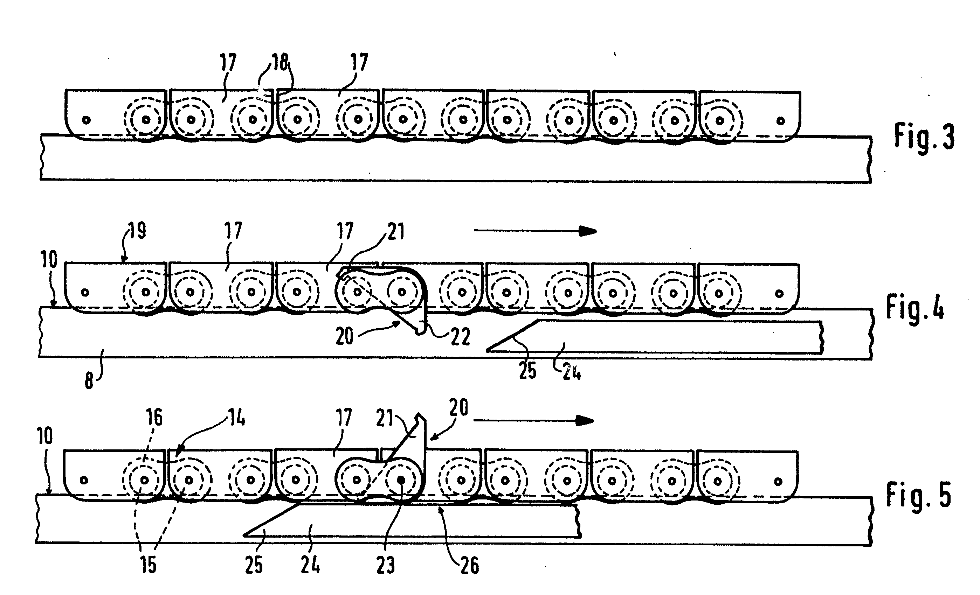

Einige der Ketteneinheiten 14 sind mit einem seitlich und schwenkbar angeordneten Mitnehmer 20 ausgerüstet. Die Ausbildung derselben ist aus den Fig. 4 und 5 näher ersichtlich. Jeder Mitnehmer 20 weist zwei im wesentlichen senkrecht zueinander angeordnete Schenkel 21 und 22 auf und ist an der gemeinsamen Verbindungsstelle 23 der beiden Schenkel 21 und 22 schwenkbar an der Achse der vorlaufenden Rolle 15 befestigt, welche zur Ketteneinheit 14 gehört, die zum Anordnen des Mitnehmers ausgewählt wurde. Die Mitnehmer 20 sind dabei so ausgebildet dass in der aus der Fig. 4 ersichtlichen Ruhestellung der eine Schenkel und zwar der Schenkel 22 nach unten gerichtet ist und sich über die Auflagefläche 10 der Schiene 8 hinaus nach unten erstreckt während der andere Schenkel 21 annähernd horizontal verläuft und zwar unterhalb der Auflagefläche 10 der Schiene 8.

An geeigneten Stellen sind entlang der Schiene 8 seitlich schienenförmige Betätigungsorgane 24 angeordnet, welche in der Fahrtrichtung (Pfeilrichtung P) eine keilförmig abgeschrägte Auflauffläche 25 und eine anschliessende Oberfläche besitzen, welch letztere etwas unterhalb der Lauffläche 10 liegt und seitlich bezüglich der Tragschiene 8 hervorsteht. Wie aus der Fig. 5 ersichtlich ist, wird der Schenkel 22 des Mitnehmers 20, beim Bewegen der aus den Ketteneinheiten 14 gebildete Kette, auf die keilförmig abgeschrägte Auflagefläche 25 des Betätigungsorganes 24 auflaufen, sodass der Mitnehmer 20 eine Schwenkung im Uhrzeigersinne ausführt und die aus der Fig. 5 ersichtliche Lage einnehmen wird. Diese Lage wird entlang der ganzen Länge des schienenförmigen Betätigungsorganes 24 zwangsläufig beibehalten, da dieses schienenförmige Betätigungsorgan 24 ein Zurückschwenken des Mitnehmers 20 im die Ruhestellung verhindert. Das Betätigungsorgan 24 kann durch speziell angeordnete Kerben eine Zwangförderung unterbrechen. Dies ist dann sinnvoll, wenn der Laufwagen 2 durch einen Anschlag kurzfristig angehalten werden muss.

Die erwähnte aus den Ketteneinheiten 14 und Tragelementen 17 gebildete endlose Kette läuft über nicht dargestellte Umkehr-Zahnräder, wobei der obere Trum der Kette frei auf der oberen Lauffläche 10 der Laufschiene und der untere Trum im kastenförmigen Kanal 12 geführt ist, wie dies aus der Fig. 2 hervorgeht. Das in seiner Dimension dem Laufwagen 2 angepasste Hohlkörperprofil weist ein hohes Trägheits- und Widerstandsmoment auf. Seine Selbsttragfähigkeit erlaubt überweite Aufhängepunkte. Fremderregte Kollisionen könnten den Laufwagen 2 nie zum Entgleisen bringen. In der Fig. 2 ist auch die eine Laufrolle 27 eines Laufwagens 2 dargestellt (Fig.2). Sämtliche in der Fig. 1 dargestellten Ausweichgeleise 6, soweit diese keine Krümmung aufweisen sondern gerade geführt sind, weisen solche generell als Freilauf-Förderorgane bezeichnete endlose Kettenanlagen auf, welche die Eigenschaft haben, dass sie die Laufwagen 2, welche sich auf den Tragelementen 17 abstützen, weitertransportieren, sofern diese nicht durch einen Anschlag od. dgl. aufgehalten werden. Während des Tranportes der Laufwagen 2 mit den beschriebenen Freilauf-Förderorganen werden die Laufrollen 27 der Laufwagen nicht bewegt sondern sie stehen still. Werden die Laufwagen, sei es durch Stau oder durch einen Anschlag aufgehalten, so laufen die endlosen Ketten der Freilauf-Förderorgane ohne Unterbruch weiter, während die Laufrollen der stehenden Laufwagen 2 rotieren.

Die gerade verlaufenden Streckenteile der Ausweichgeleise 6 und diejenigen der Sammelgeleise 13 sind mit den beschriebenen Freilauf-Förderanlagen versehen. Die gekrümmten Uebergangsstellen 28, mittels welchen der Anschluss an die Einschienenfahrbahn 1 bzw. an die Sammelgeleise erfolgt, besitzen eine einfache Schiene mit Weiche ohne jeglicher Förderanlage. Auf diesen Anfangsabschnitten der mit Freilauf-Förderanlagen ausgerüsteten Bereiche werden die Laufwagen 2 kraftschlüssig gefördert, wie dies nachfolgend beschrieben wird. Wesentlich ist noch, dass jeder Anfangsabschnitt im wesentlichen der Länge eines Laufwagens 2 entspricht.

Im Betrieb werden auf der Einschienenfahrbahn 1 der beschriebenen Förderanlage mittels Laufwagen 2 Güter z.B. Bekleidungsstücke transportiert. Dazu sind an und für sich bekannte Mitnehmer erforderlich, welche entlang der Einschienenfahrbahn 1 bewegt werden und die einzelnen Laufwagen 2 kraftschlüssig vorwärts bewegen. So gelangen die einzelnen Förderwagen an die einzelnen Arbeits- oder Lagerplätze 5 wo eine Be- oder Verarbeitung der einzelnen Bekleidungsstücke erfolgt, die anschliessend mittels des Förderwagens 2 weitertransportiert werden. Falls nun die Bearbeitung an einem bestimmten Arbeitsplatz z.B. am Arbeitsplatz 5a mehr Zeit in Anspruch nimmt und bereits weitere Laufwagen mit Bekleidungsstücken nachrücken, die ebenfalls die gleiche Bearbeitung erfahren sollten, so werden diese nachfolgenden Laufwagen durch die Betätigung der Weiche 7a auf das Sammelgeleis 13 und weiter auf eine der freien Ausweichgeleise 6 umdirigiert. Dies geschieht im einzelnen wie folgt : Nach Umstellung der Weiche 7a gelangt der betreffende Laufwagen 2 mit seiner in der Fahrtrichtung vorderen Laufrolle 27 über die Weiche auf den Übergangsabschnitt 28 und wird durch die hintere Laufrolle, welche sich noch auf der Einschienenfahrbahn befindet und dort kraftschlüssig vorwärts bewegt wird, weiter gestossen. Anschliessend gelangt die hintere Laufrolle 27 auch auf die Weiche 7a und ausserhalb des Wirkbereiches der entlang der Einschienenfahrbahn wirkenden kraftschlüssigen Förderung, während die vordere Laufrolle den Anfangsabschnitt 13a des Geleises 13 erreicht. Dieses Geleise 13 ist, wie erwähnt, mit den beschriebenen Freilauf-Förderorganen ausgerüstet, wobei am Anfangsabschnitt 13a ein schienenförmiges Betätigungsorgan 24 vorgesehen ist, welches einen Mitnehmer 20 der aus Ketteneinheiten 14 und Tragelementen 17 bestehende umlaufende Förderkette aktiviert, so dass derselbe um 90° im Uhrzeigersinne verschwenkt wird und mit seinem Schenkel 21 in die Fahrbahn des Laufwagens gelangt, welcher somit kraftschlüssig und zwangsläufig mit der Förderkette weitertransportiert wird, so dass der Laufwagen vollständig d.h. sowohl mit der vorderen Laufrolle als auch mit der hinteren Laufrolle die Uebergangsstelle 28 verlässt und mit der durch die Ketteneinheiten 14 gebildete Förderkette fortbewegt wird. In dieser Weise wirkt die Förderkette als Tragorgan, welches auf der Lauffläche 10 der Tragschiene 8 abrollt. Die Länge des Betätigungsorganes 24 ist auf diese Strecke beschränkt, so dass anschliessend die zwangsweise Arretierung des Mitnehmers 20 aufhört und dieser in die Ruhelage zurückkehrt, in welcher der Schenkel 21 wieder die horizontale Lage einnimmt und nicht mehr als Mitnehmer wirkt.

Der Laufwagen 2 befindet sich auf dem Sammelgeleise 13 und wird von der auf diesem Geleise angeordneten Förderkette getragen wobei die Laufrollen der Laufwagen 2 stillstehen. Im Weiteren wird der Laufwagen in ähnlicher Weise wie beschrieben auf eine der Ausweichgeleise 6 dirigiert wo er von einem Endanschlag 29 aufgehalten wird. Der Endanschlag ragt in seiner Wirkstellung in die Bewegungsbahn des Laufwagens 2 und kann aus dieser Wirkstellung in eine inaktive Stellung gebracht werden, bei welcher die Laufwagen 2 nicht gehindert werden. Falls ein Laufwagen 2 durch den Endanschlag 29 aufgehalten wird, so wird dadurch die Bewegung der Förderkette nicht beeinflusst, da beim Aufhalten des Förderwagens die bis dahin stillstehenden Laufrollen 27 desselben aktiviert werden und zu rollen beginnen. Wenn weitere Laufwagen 2 eintreffen, so laufen diese auf die schon stehende Laufwagen auf, werden angehalten und bleiben in Bereitschaftsstellung bis eine weitere Bearbeitungsstation frei wird.

Es sei noch erwähnt dass das in der Fig. 1 mit 30 bezeichnete Doppelgleis eine sehr platzsparende Lagerung von Transportwagen 31 erlaubt, indem diese mit der vorderen Laufrolle und mit der hinteren Laufrolle auf verschiedenen Geleisen geführt werden. Der Abstand der beiden Geleise muss sinngemäss dem Achsabstand der Laufwagen angepasst werden.

Die beschriebene Förderanlage ist sehr einfach aufgebaut, besitzt keine komplizierten Steuerungsorgane und kann somit zuverlässig und sehr effektvoll betrieben werden.

## Ansprüche

1. Förderanlage zum Transportieren von Gütern, mit einer Einschienenfahrbahn, die gegenüber einer Arbeitsebene erhöht in einer Transportebene verlaufend angelegt ist, insbesondere im Bereich der Decke eines Arbeits- oder Lagerraumes, mit einer Mehrzahl von Laufwagen, welche mit sich auf der Einschienenfahrbahn abwälzenden Rollen ausgerüstetet und welche entlang dieser Schienenfahrbahn in der Transportebene verfahrbar sind, und mit Förderorganen zur Verschiebung der Laufwagen entlang der Einschienenfahrbahn, dadurch gekennzeichnet, dass einzelne Bereiche der Förderanlage mit Freilauf-Förderorganen, die bei laufendem Förderorgan einen Stillstand der Laufwagen gestatten, und einem wahlweise aktivierbaren Endanschlagorgan versehen sind.

2. Förderanlage nach Anspruch 1, dadurch gekennzeichnet, dass die mit Freilauf-Förderorganen ausgerüsteten Bereiche einen Anfangsabschnitt besitzen, innerhalb welchem die Laufwagen kraftschlüssig gefördert werden.

3. Förderanlage nach Anspruch 2, dadurch gekennzeichnet, dass der Anfangsabschnitt im wesentlichen der Länge eines Laufwagens entspricht.

4. Förderanlage nach einem der vorhergehenden Ansprüche, dadurch gekennzeichnet, dass die Freilauf-Förderorgane durch endlos umlaufende, kettenartige Elemente gebildet sind, die sich auf Tragschienen abrollen.

5. Förderanlage nach Anspruch 4, dadurch gekennzeichnet, dass die kettenartigen Elemente Einheiten mit paarweise zusammengefassten, mit je zwei Laschen miteinander verbundenen Rollen aufweisen, die auf den Tragschienen aufliegen.

6. Förderanlage nach Anspruch 5, dadurch gekennzeichnet, dass zwei benachbarte Einheiten mit einem Tragelement gelenkig miteinander verbunden sind.

7. Förderanlage nach Anspruch 6, dadurch gekennzeichnet, dass jedes Tragelement im Querschnitt U-förmig ist.

8. Förderanlage nach den Ansprüchen 5-7, dadurch gekennzeichnet, dass die Tragelemente eine derartige Länge besitzen und derart angeordnet sind, dass sie bei gestrecktem, kettenartigen Element mit ihren Stirnflächen aneinanderstossen und so eine im wesentlichen kontinuierliche Auflageschiene für die Laufwagen bilden.

9. Förderanlage nach einem oder mehreren der vorhergehenden Ansprüche, dadurch gekennzeichnet, dass die kettenartigen Elemente mit Mitnehmern versehen sind.

10. Förderanlage nach Anspruch 9, dadurch gekennzeichnet, dass die Mitnehmer zwei im wesentlichen senkrecht zueinander stehende Schenkel besitzen und im Bereich des Verbindungspunkts der beiden Schenkel schwenkbar an der Drehachse der jeweils vorlaufenden Rolle von ausgewählten Einheiten der kettenartigen Elemente befestigt sind.

11. Förderanlage nach Anspruch 10, dadurch gekennzeichnet, dass die Mitnehmer um 90° derart von einer Ruhestellung in eine Arbeitsstellung verschwenkbar sind, dass der eine Schenkel in Arbeitsstellung über die Auflagefläche der Tragelemente hinausragt und dass der andere Schenkel in Ruhestellung über die Auflagefläche der Rollen hinausragt.

12. Förderanlage nach einem oder mehreren der vorhergehenden Ansprüche, dadurch gekennzeichnet, dass die Tragschienen für die Freilauf-Förderorgane im genannten Anfangsabschnitt eine Betätigungsschiene aufweisen, deren Oberfläche bezüglich der Tragschiene seitlich hervorsteht und gegen welche die einen Schenkel der Mitnehmer auflaufen, um diese von der Ruhestellung in die Arbeitsstellung zu verschwenken und in dieser zu halten.

Fig.1

EP 0 430 865 A1

Fig. 2

Fig.3

Fig.4

Fig.5

**Europäisches Patentamt**

## EUROPÄISCHER RECHERCHENBERICHT

Nummer der Anmeldung

EP 90 81 0788

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A- 101 602 (W. WILLS) <br> * Als ganzes * | 1 | B 65 G 19/26 <br> B 65 G 17/00 |
| A | | 4,6,7,9 | |
| | --- | | |
| Y | FR-A-2 448 975 (S.A. MARTIN) <br> * Ansprüche 1,2,4,5 * | 1 | |
| | --- | | |
| Y | FR-A-2 311 734 (W & M AUTOMATION KARL MÜLLER GmbH) <br> * Ansprüche 1,2,3,4; Fig. * | 2,5,12 | |
| | --- | | |
| A | GB-A-2 152 463 (STOCKRAIL SERVICES LTD) <br> * Seite 1, Zeilen 109-124; Seite 4, Zeilen 101-126; Fig. * | 1,8 | |
| | ----- | | |

RECHERCHIERTE SACHGEBIETE (Int. Cl.5)

B 65 G
B 61 B

Der vorliegende Recherchenbericht wurde für alle Patentansprüche erstellt

| Recherchenort | Abschlußdatum der Recherche | Prüfer |
|---|---|---|
| DEN HAAG | 04-02-1991 | VAN ROLLEGHEM F.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P0403)